# EUROPÄISCHE PATENTSCHRIFT

(11) **EP 2 951 068 B1**
(45) Veröffentlichungstag und Bekanntmachung des Hinweises auf die Patenterteilung: **15.05.2019**
(21) Anmeldenummer: 14702549.8
(22) Anmeldetag: 30.01.2014
(51) Int. Cl.: B60T 11/232, B60T 11/236

(54) **HAUPTBREMSZYLINDER FÜR EINE HYDRAULISCHE KRAFTFAHRZEUGBREMSANLAGE**
MASTER VEHICLE BRAKE CYLINDER
MAITRE CYLINDRE POUR FREINAGE D'UN VEHICULE

(30) Priorität: 30.01.2013 DE 102013201559
(43) Veröffentlichungstag der Anmeldung: 09.12.2015
(73) Patentinhaber: Continental Teves AG & Co. OHG, 60488 Frankfurt am Main (DE)
(72) Erfinder: KÖNIG, Harald, 61239 Ober-Mörlen (DE); GRAICHEN, Kai-Michael, 63329 Egelsbach (DE); KREBS, Stephan, 65760 Eschborn (DE); KOLLERS, Michael, 65760 Eschborn (DE); KRÄMER, Horst, 65462 Ginsheim-Gustavsburg (DE); MACHER, Andreas, 64546 Mörfelden-Walldorf (DE)
(86) Internationale Anmeldenummer: PCT/EP2014/051855
(87) Internationale Veröffentlichungsnummer: WO 2014/118302

(56) Entgegenhaltungen:
- WO-A1-2005/066005
- DE-A1-102004 048 670
- DE-A1-102008 013 348
- DE-T2- 60 208 806

## Beschreibung

Die Erfindung betrifft einen hydraulischen, insbesondere zweikreisig aufgebauten Tandemhauptbremszylinder (THz) für eine hydraulische Kraftfahrzeugbremsanlage nach dem Oberbegriff des Anspruchs 1. Einem derartigen Hauptbremszylinder (THz) ist meist ein pneumatischer Bremskraftverstärker vorgeschaltet, welcher eine Verstärkungsfunktion ermöglicht. Die Einheit von Hauptzylinder und Bremskraftverstärker wird üblicherweise als Bremsgerät bezeichnet und ist eine Bestandteil eine Kraftfahrzeugbremsanlage.

Tandem-Hauptbremszylinder sind bekannt. Für die korrekte Funktionsfähigkeit eines Tandem-Hauptbremszylinders ist es erforderlich, eine hydraulische Verbindung zwischen der Druckkammer und einem Druckmittelbehälter sowohl in einer Ausgangsstellung bzw. Neutralstellung bei einem ungebremsten Zustand, als auch kurzzeitig zu Beginn des Bremsvorganges bzw. zu Beginn der Bewegung des Kolbens sicherzustellen. Bekannte Kolben von Plunger-Tandemhauptbremszylindern weisen zu diesem Zweck in der Regel eine Reihe als radiale Bohrungen ausgeführten Nachlaufverbindungen, sogenannter Saugbohrungen auf.

Zur Verbesserung des Verhaltens bei einer Bremseinleitung, insbesondere zur Gewährleistung einer Sicheren hydraulischen Verbindung zum Druckmittelvorratsbehälter sowie zur Vermeidung eines Spiels bzw. eines Pedalleerwegs weist bekannter Stand der Technik (beispielsweise DE102004048670A1, DE60208806T2) auch weitere Modifikationen auf. Beispielsweise sind Plunger-Tandemhauptbremszylinder für Hydraulische Kraftfahrzeugbremsanlagen bekannt, dessen Sekundärkolben neben einer einzelnen Reihe Saugbohrungen sogenannte Nachsaug- oder Pilotbohrungen aufweisen. Es handelt sich hierbei um eine relativ zu der Ebene der Saugbohrungen entgegen der Betätigungsrichtung versetzte, so dass sie beim Schließen später geschlossen wird, Reihe zusätzlicher Durchgangsöffnungen, dessen kumulierte Durchtrittsfläche deutlich geringer ist, verglichen mit der Durchtrittsfläche der Saugbohrungen.

Bei vielen bekannten Bremsanlagen wird angestrebt einen Pedalleerweg möglichst kurz zu halten um einen raschen Bremskraftaufbau nach einem möglichst geringen Zeitversatz zu erzielen.

### Nachteile:

Als Nachteilig bei bekannten Systemen wir unter Anderem angesehen, dass ein kurzer Pedalleerweg und nachfolgender steiler Druckanstieg derartiger Systeme zu empfindlichen Komforteinbußen führen kann, beispielsweise durch ein hartes, unangenehmes Pedalgefühl, odereiner höheren Geräuschentwicklung aufgrund eines abrupten Abbremsens eines an den THz gekoppelten Bremskraftverstärkerkolbens bzw. Membrantellers mit Steuergehäuse.

Es ist ferner bekannt, dass dynamische Effekte infolge der Abbremsung der Innenteile eines Pneumatischen Bremskraftverstärkers zu Geräuschen führen können, wenn das einströmende Atmosphärenvolumen ad hoc zum Stillstand kommt, wenn diese gegen die hydraulische Säule der THz-Kammern auflaufen nachdem der hydraulische Schließweg im THz von den Kolben durchfahren wurde. Es kommt zu einem sogenannten Antrittsklopfen.

### Aufgabe:

Es stellt sich daher eine Aufgabe, eine verbesserte Kraftfahrzeugbremsanlage anzubieten, welche unter Vermeidung der vorgenannten Nachteile aus dem Stand der Technik eine sanfte, leise und dennoch ausreichend sichere Bremseinleitung ermöglicht.

### Lösung und Vorteile:

Die Aufgabe wird erfindungsgemäß durch einen Hauptbremszylinder mit der Merkmalskombination nach dem Anspruch 1 gelöst. Unteransprüche und Figuren geben weitere vorteilhafte Ausführungsformen und Weiterbildungen an.

Indem die Nachlaufverbindungen auf der Mantelfläche in einer Weise angeordnet werden, dass diese nicht auf einer einzigen parallel zum Kolbenrand umlaufenden Linie bzw. in einer quer zur Kolbenbohrung verlaufenden Ebene angeordnet, sondern auf mindestens 3 zum Kolbenrand gestaffelt beabstandet beziehungsweise kaskadierend angeordneten Ebenen verteilt sind, kann vorteilhafterweise ein kontinuierliches, sukzessives Schließen der Kolbenbohrungen und somit ein längeres Aufrechterhalten eines durchströmten Querschnitts bzw. Durchtrittsfläche nach Einleitung eines Bremsvorgangs realisiert und somit ein hartes, abruptes Bremspedalverhalten vermieden sowie unerwünschte Geräuschentwicklung reduziert werden.

In den vorteilhaften Weiterbildungen kann je nach gewünschtem Schließverhalten der Abstand der einzelnen Ebenen bzw. Kaskaden zueinander in größeren oder kleineren Abständen definiert werden. Hierdurch kann die Bremsanlage im Hinblick auf einen angestrebten Gesamtschließweg und Druckgradient in Abhängigkeit vom hydraulischen Verbraucher und Bremsgerätedynamik besonders effizient und kostengünstig optimiert werden.

Vorzugsweise werden erfindungsgemäß im Gegensatz zu konventionell größeren Nachlaufverbindungen relativ kleine Nachlaufverbindungen verwendet.

In einer weiteren erfindungsgemäßen Ausführungsform weist die Hauptebene, d.h. die Ebene, die zuletzt beim Betätigen schließt, vorzugsweise mindestens 3 Nachlaufverbindungen auf. Die Anzahl der Öffnungen auf der zweiten Ebene ist nach einer vorteilhaften Weiterbildung höchstens gleich groß wie die Anzahl der Öffnungen der Hauptebene. Hierdurch kann die Reduzierung des durchströmten Querschnitts bei einer Bremseinleitung gleichmäßiger erfolgen und ein abruptes Schließen vermieden werden können.

Jede Nachlaufverbindung der Hauptebene weist nach einer weiterreden vorteilhaften Weiterbildung einen mindestens gleich großen Querschnitt auf wie jede der Nachlaufverbindungen der weiteren Ebenen.

In einer besonderen bevorzugten Ausführung sind alle Nachlaufverbindungen aller Ebenen gleich groß ausgeführt.

Vorteilhafterweise können die Ebenen 2, 3 und weitere gegenüber der Hauptebene in Betätigungsrichtung nach vorn versetzt angeordnet vorgesehen sein, so dass es keine Öffnungen gibt, die als sog. Pilotbohrungen beim Schließen später geschlossen werden. Aufgrund dessen gibt es keinen geschwindigkeitsabhängigen langsameren Druckaufbau bei geringen Betätigungsgeschwindigkeiten.

Vorzugsweise kann der Abstand zwischen der ersten Ebene und einer letzten Ebene (je nach Ausführungsform der dritten, der vierten usw.)in einem Bereich zwischen 0,5mm und 3mm liegen.

In einer besonders bevorzugten Ausführung liegt der Abstand zwischen der ersten und der letzten Ebene in einem Bereich zwischen 0,9mm und 1,5mm.

Durch die vorbezeichneten Merkmale können insbesondere ermöglicht werden:
- sanfter hydraulischer Druckaufbau im Hauptbremszylinder
   gegen Ende des Schließweges beziehungsweise ein flacher Gradient der Querschnittsverringerung beim Verschließen der Hauptebene,
- Kompensation von ungewollten dynamischen Effekten, welche Geräusche verursachen könnten,
- Gewährleistung des sicheren Öffnens bereits alleine mit der Hauptebene, ohne das Spiel (Leerweg) zu reduzieren.

### Figurenbeschreibung

Weitere Einzelheiten, Merkmale, Vorteile und Anwendungsmöglichkeiten der Erfindung gehen aus Unteransprüchen zusammen mit der Beschreibung anhand der Zeichnungen hervor. Übereinstimmende Komponenten und Konstruktionselemente werden nach Möglichkeit mit gleichen Bezugszeichen versehen. Nachstehend zeigt:
Fig.1 Eine Ausführungsform eines erfindungsgemäßen Hauptbremszylinders in einer Schnittdarstellung.
Fig.2 Eine räumliche Teilansicht eines erfindungsgemäßen Kolbens nach Fig.1.
Fig.3 eine Schnittdarstellung einer erfindungsgemäßen Ausführungsform eines Kolbens.
Fig.4 eine Schnittdarstellung einer weiteren erfindungsgemäßen Ausführungsform eines Kolbens.
Fig.5 eine Detailansicht des Kolbens nach Fig.4.
Fig.6 ein Vergleich eines Druck-Weg-Diagramms eines bekannten (a) und erfindungsgemäßen Hauptbremszylinders (b) bei einer langsamen Betätigungsgeschwindigkeit.
Fig.7 ein Vergleich eines Druck-Weg-Diagramms eines bekannten (a) und erfindungsgemäßen Hauptbremszylinders (b) bei einer schnellen Betätigungsgeschwindigkeit.

### Fig.1

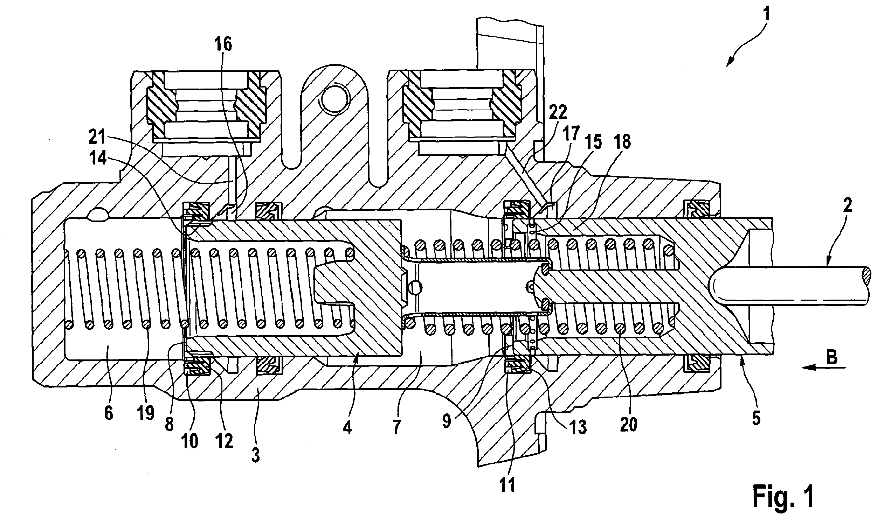

In der Fig.1 ist eine Schnittdarstellung einer ersten erfindungsgemäßen Ausführungsform eines Hauptbremszylinders 1 abgebildet. Der Hauptbremszylinder 1 ist als ein Tandem-Hauptzylinder des Plunger-Typs ausgeführt. Weil die Funktionsweise von derartigen Hauptbremszylindern hinreichend bekannt ist, wird nachfolgend lediglich auf die besonders erfindungsrelevante Eigenschaften eingegangen.

In einem Gehäuse 3 des Hauptbremszylinders 1 sind zwei Kolben 4 (Sekundärkolben) und 5 (Primärkolben) hintereinander verschiebbar angeordnet. Dabei begrenzt der Kolben 4 in dem Gehäuse 3 einen mit einem Druckmittel gefüllten Druckraum 6 und ist diesem gegenüber mittels einer Dichtmanschette 12 abgedichtet; der Kolben 5 begrenzt den ebenfalls mit einem Druckmittel gefüllten Druckraum 7 und ist diesem gegenüber mittels der Dichtmanschette 13 abgedichtet. Sowohl der Kolben 4 als auch der Kolben 5 sind im Wesentlichen topfförmig ausgebildet und zeigen mit ihrem jeweiligen Kolbenrand 8 beziehungsweise 9 in Richtung des jeweils begrenzen Druckraum 6 beziehungsweise 7. Ein in den Druckräumen 6, 7 erzeugbarer Bremsdruck wird über nicht gezeigte Bremsleitungen an die nicht gezeigten Radbremsen weitergeleitet.

Die Dichtmanschetten 12,13 sind jeweils in den Ringnuten 10,11 in dem Gehäuse 3 positioniert.

Um die Kolben 4,5 herum sind in dem Gehäuse 3 in Betätigungsrichtung B unmittelbar vor den Ringnuten 10, 11 jeweils als eine Ringnut mit einer in Richtung Ringnut 10 beziehungsweise 11 abgeschrägten Flanke ausgebildete Nachlaufräume 16 und 17 angeordnet. Die Nachlaufräume 16, 17 sind über Nachlaufkanäle 21,22 mit Kammern eines nicht abgebildeten drucklosen Druckmittelbehälters permanent verbunden und verbleiben daher ebenfalls drucklos.

Die Kolben 4,5 verfügen über mehrere Nachlaufverbindungen 14 beziehungsweise 15, die in der gezeigten, unbetätigten Ausgangslage ungeachtet der Dichtmanschetten 14, 15 eine hydraulische Verbindung zwischen den jeweiligen Druckräumen 6,7 und den drucklosen Nachlaufräumen 16, 17 ermöglichen und so einen Druckausgleich und Entlüftung des Bremssystems unterstützen.

Die beiden Rückstellfedern 19 und 20 werden bei einem Bremsvorgang durch Verschiebung der Kolben 4 bzw. 5 in die Betätigungsrichtung B komprimiert und dienen zum Rückversetzen der beiden Kolben 4,5 in ihre jeweiligen unbetätigten Ausgangspositionen nach Beendigung eines Bremsvorgangs.

Der Kolben 5 wird durch eine Druckstange eines ansonsten nicht abgebildeten pneumatischen Bremskraftverstärkers 2 betätigt. Bei einem Bremsvorgang beaufschlägt der Bremskraftverstärker 2 den Kolben 5 in die Betätigungsrichtung B mit einer Kraft und verschiebt diesen aus seiner unbetätigten Ausgangsposition ausgehend in Richtung Kolben 4. Der Kolben 4 wird dabei zunächst durch die Steifigkeit der Rückstellfeder 20 und anschließend durch einen sich in der Druckkammer 7 aufbauenden Bremsdruck weitgehend synchron mit dem Kolben 5 in die gleiche Richtung mitverschoben. Dabei werden die Nachlaufverbindungen 14, 15 sukzessive durch Überfahren mit den Dichtmanschetten 12,13 von den Nachlaufräumen 16, 17 abgetrennt und ein Strom des aus den Druckräumen 6,7 in die Nachlaufräume 16, 17 verdrängbaren Druckmittels unterbunden, so dass in den Druckräumen 6,7 Bremsdruck aufgebaut werden kann. Ein Verschiebeweg des Kolbens, bei dem die Nachlaufverbindungen 14, 15 von den Nachlaufräumen 16, 17 durch Dichtmanschetten 12, 13 abgetrennt werden, wird allgemein als ein Schließweg bezeichnet.

Wird dabei die hydraulische Verbindung zu den Nachlaufräumen 16,17 zu abrupt unterbrochen, beispielsweise bei einer Vollbremsung, kann dies im Allgemeinen zu einer ungewollt schnellen Abbremsung des Kolbens 5, ebenso der bewegten Komponenten eines durch die Kolbenstange mit dem Kolben 5 in Verbindung stehenden pneumatischen Bremskraftverstärkers 2 aber auch zu Störung von Luftströmen innerhalb des Bremskraftverstärkers 2. Dadurch kann es zu einer hohen Geräuschentwicklung kommen - dem sogenannten Antrittsklopfen. Darüber hinaus Verursacht ein abruptes Abbremsen des Kolbens ein hartes und unangenehmes Pedalgefühl.

Eine erfindungsgemäße Verbesserung des vorstehend beschriebenen Verhaltens wird insbesondere durch die nachfolgenden Figuren erklärt.

### Fig.2

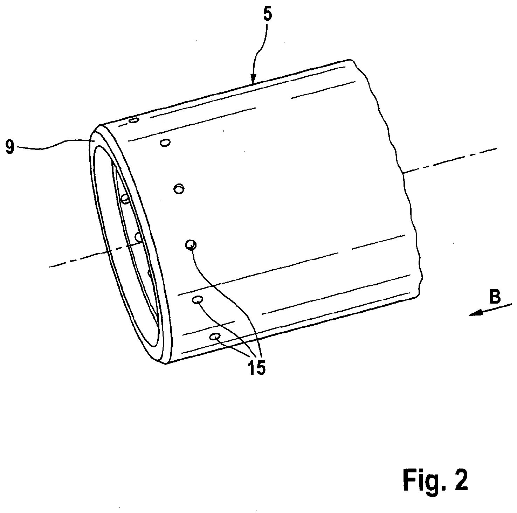

In der Fig. 2 ist eine räumliche Teilansicht eines erfindungsgemäßen Kolbens 5 nach Fig.1 gezeigt.

Die Nachlaufverbindungen 15 sind als Querbohrungen ausgeführt, die radial am Umfang der Mantelfläche des Kolbens 5 verteilt angeordnet sind. Dabei sind sie derart angeordnet, dass sie nicht auf einer einzigen parallel zum Kolbenrand 9 verlaufenden Linie beziehungsweise Ebene angebracht sind, sondern kaskadierend beziehungsweise zum Kolbenrand 9 gestaffelt beabstandet und auf mehreren Ebenen zueinander versetzt verteilt sind.

Durch diese Anordnung werden nach Einleitung eines Bremsvorgangs die einzelnen Gruppen von Nachlaufverbindungen 15 nach und nach, Ebene für Ebene von der Dichtmanschette 13 überfahren, wodurch ein kontinuierliches, sukzessives Schließen der Nachlaufverbindungen 15 und somit ein längeres Aufrechterhalten des kumulierten durchströmten Querschnitts beziehungsweise der Durchtrittsfläche realisiert ist.

### Fig.3

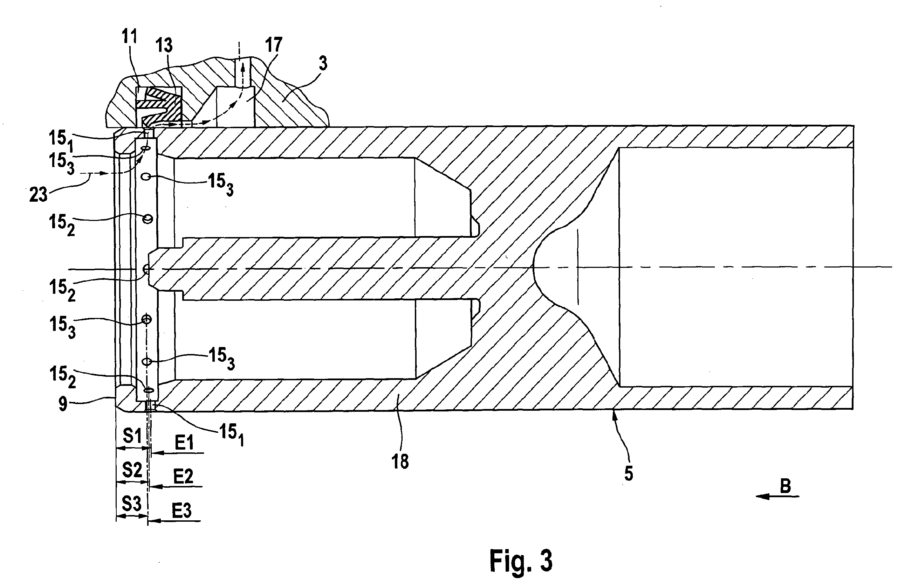

Die Fig.3 zeigt eine Schnittdarstellung einer ersten erfindungsgemäßen Ausführungsform des Kolbens 5.

Wie bereits in der Fig.2 beschrieben, sind die Nachlaufverbindungen 15 in Gruppen auf jeweils einer Ebene E1,E2,E3 angeordnet, wobei die jeweiligen Ebenen parallel zum Kolbenrand 9 jedoch in unterschiedlichen Abständen S1,S2,S3 zu diesem verlaufen, wobei gilt S1>S2>S3

Eine Hauptebene E1 definiert dabei den Schließweg des Kolbens und ist mit dem Abstand S1 am weisteten von dem Kolbenrand 9 entfernt angeordnet. Nach dem Durchfahren von den in der Hauptebene E1 positionierten Nachlaufverbindungen 15₁ wird der Druckmittelstrom 23 aus der Druckkammer 7 zur Nachlaufkammer 17 gänzlich unterbrochen. Die Ebenen E2 und E3 liegen gegenüber der Hauptebene E1 in Richtung Kolbenrand 9 versetzt, das heißt es gibt keine aus dem Stand der Technik bekannte, meist kleinere sogenannte Pilotbohrungen, welche beim Schließen erst später, nach den Nachlaufverbindungen 15₁ der Hauptebene E1 geschlossen werden. Aufgrund dessen gibt es keinen geschwindigkeitsabhängigen langsameren Druckaufbau bei geringen Betätigungsgeschwindigkeiten.

Erfindungsgemäß werden in allen Ebenen E1,E2,E3 statt der üblichen größeren Querbohrungen relativ kleine verwendet.

Eine Aufteilung der Nachlaufverbindungen 15 in mindestens drei Kaskaden beziehungsweise gestaffelte Ebenen E1,E2,E3 stellt sich als besonders effektiv, da die Reduzierung des kumulierten durchströmten Querschnitts gleichmäßiger erfolgt als bei wenigen großen, in einer Ebene angeordneten Querbohrungen, weil ein größerer Durchmesser der Querbohrungen aufgrund der schnell verringernden Segmentfläche des noch durchströmten Bohrungsanteils gegen Ende des Schließweges ein abruptes Schließen verursachen würde.

Die Anzahl der in der Hauptebene E1 gruppierten Nachlaufverbindungen 15₁ soll dabei mindestens 3 Stück betragen, eine größere Anzahl als 3 ist ebenfalls innerhalb der Erfindung möglich. Die Anzahl in der Ebene E2 gruppierten Nachlaufverbindungen 15₂ ist dabei nicht größer als in der Hauptebene E1.

Um einen langsameren Druckaufbau bei geringen Betätigungsgeschwindigkeiten zu vermeiden sind die Querschnittsflächen der Nachlaufverbindungen 15₁ der Hauptebene E1 mindestens gleich groß ausgeführt wie die Querschnittsflächen der Nachlaufverbindungen 15₂ der benachbarten Ebene E2. Vorzugsweise sind alle Querschnittsflächen aller Nachlaufverbindungen 15 in allen Ebenen gleich groß ausgebildet.

Je nach gewünschtem Schließverhalten kann dabei innerhalb der Erfindung der Abstand der einzelnen Ebenen bzw. Kaskaden zueinander variiert und größer oder kleiner definiert werden, um ein Optimum in Bezug auf den Gesamtschließweg und einen Druckgradient in Abhängigkeit vom hydraulischen Verbraucher und Bremsgerätedynamik zu erreichen.

### Fig.4

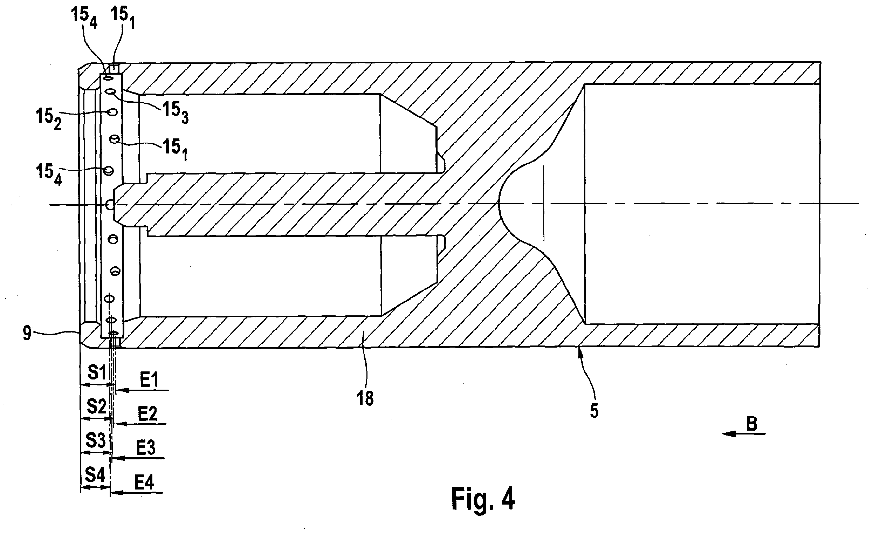

Die Fig.4 zeigt eine Schnittdarstellung einer weiteren erfindungsgemäßen Ausführungsform des Kolbens 5. Im Unterschied zu der Ausführung nach Fig.3 sind die Nachlaufverbindungen 15 in 4 Ebenen angeordnet. Dabei gelten für die Anzahl der Nachlaufverbindungen 15 in einer Ebene, insbesondere der Hauptebene E1 sowie due Querschnittsflächen die gleichen Bedingungen wie unter Fig.3 beschrieben.
Die gezeigte erfindungsgemäße Ausführungsform ermöglicht ein angenehmes Pedalgefühl auch bei besonders starken und schnellen Bremsvorgängen.

Vorzugsweise kann der Abstand zwischen der ersten Ebene (Hauptebene E1) und der letzten Ebene (Je nach Ausführungsform E3 oder E4 etc.) in einem Bereich zwischen 0,5mm und 3mm liegen.

In einer besonders bevorzugten Ausführung liegt der Abstand zwischen der ersten und der letzten Ebene in einem Bereich zwischen 0,9mm und 1,5mm.

Prinzipiell können innerhalb der Erfindung auch mehr als 4 Ebenen vorgesehen werden, jedoch kann das Einbringen weiterer Ebenen oder die Erhöhung des Abstandes zwischen der Hauptebene E1 und der jeweils letzten Ebene über die vorgeschlagenen Anzahl und Maße hinaus zu einer unerwünschten Erhöhung des Pedalleerweges und schwammigen Pedalgefühl führen.

### Fig.5

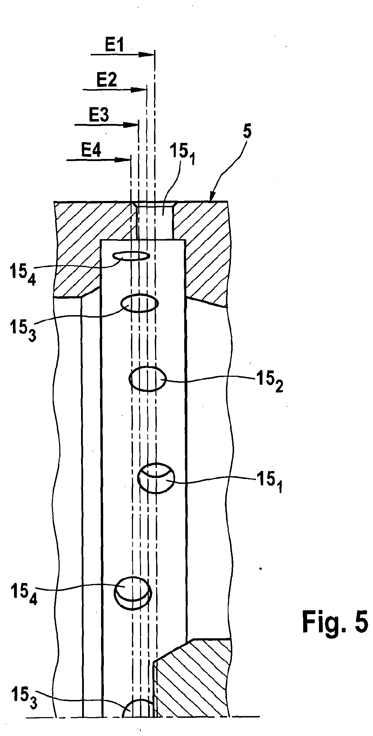

Die Fig.5 verdeutlicht in einer vergrößerten Detailansicht die Aufteilung der Nachlaufverbindungen 15 und Anordnung der Ebenen E1 bis E2 in einem Kolben 5 nach Fig.4

### Fig.6

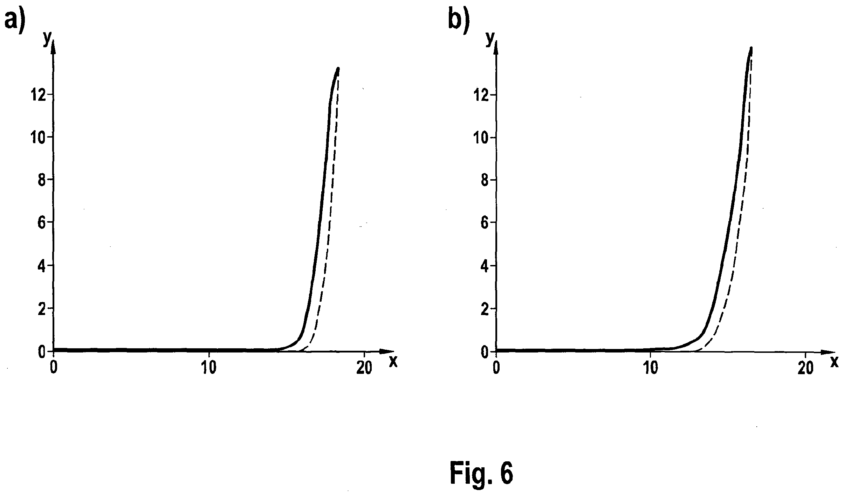

Die Fig.6 zeigt in einem Druck-Weg-Diagramm die Hysteresen vom Bremsdruck in einer Druckkammer eines bekannten konventionellen (a) und eines erfindungsgemäßen Hauptbremszylinders (b) bei einer langsamen Betätigungsgeschwindigkeit. Auf der X-Achse ist dabei der Verschiebeweg des Kolbens, auf der Y-Achse der Bremsdruck in der Druckkammer eingetragen. Die Druckaufbaukurve beim Einleiten einer Bremsung ist durchgezogen und die Druckabbaukurve beim Beendigen der Bremsung gestrichelt dargestellt. Es ist dabei deutlich zu erkennen, dass beim erfindungsgemäßen Hauptbremszylinder in der Ansicht "b" die Druckaufbaukurve einen geringfügig früheren, sanfteren Anstieg aufweist und anschließend nahezu identisch steil wie beim konventionellen Hauptbremszylinder verläuft., so dass der gewünschter Bremsdruck genauso schnell erreicht wird.

Die Druckabbaukurven der Kontrahenten sind nahezu gleich, wodurch erkennbar ist, dass der erfindungsgemäße Hauptbremszylinder keine Nachteile wie beispielsweise ein zu langsames Druckabbau und ein "Hängen" des Bremspedals aufweist.

### Fig.7

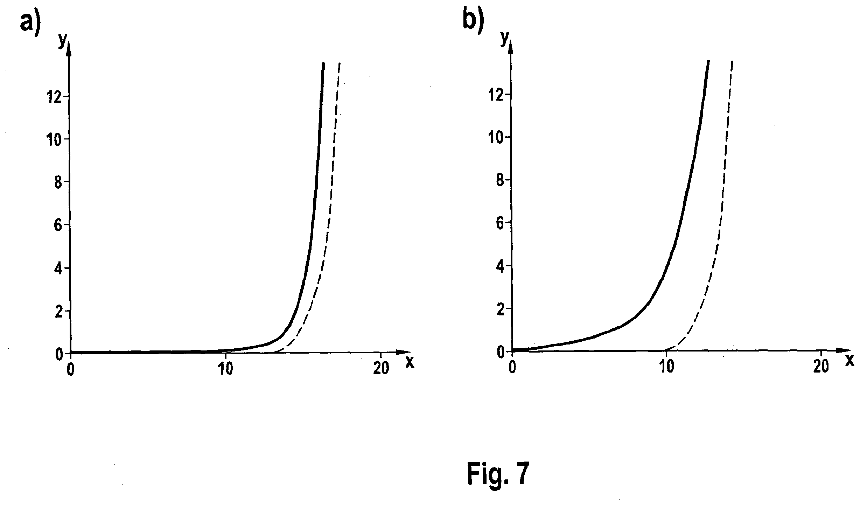

Analog zu Fig. 6 zeigt Fig.7 die Hysteresen vom konventionellen (a) und erfindungsgemäßen (b) Hauptbremszylinder, jedoch bei einer schnellen Bremsbetätigungsgeschwindigkeit - beispielsweise einer Vollbremsung. Diese Abbildung zeigt besonders deutlich die Vorteile des erfindungsgemäßen Hauptbremszylinders (b). Während bei einem konventionellen Hauptbremszylinder die Druckaufbaukurve (a) ähnlich steil wie in der Fig.6 verläuft, was beim schnellen Pedaltritt ein eher spätes, hartes und unangenehmes Gefühl verursachen würde, verläuft die Druckaufbaukurve bei einem erfindungsgemäßen Hauptbremszylinder (b) deutlich weicher und sanfter, zudem beginnt der Bremsdruckaufbau wesentlich früher und erreicht auch früher, somit bei weniger Pedalweg, die höheren Bremsdruckwerte. Hierdurch kann das Fahrzeug schneller und unter Vermeidung vom unangenehmen Pedalgefühl zum Stillstand gebracht werden. Die Druckabbaukurve des erfindungsgemäßen Hauptbremszylinders verläuft ähnlich steil und somit ohne Nachteile gegenüber dem konventionellen Hauptbremszylinder.

### Bezugszeichen:

- 1: Hauptbremszylinder
- 2: Bremskraftverstärker
- 3: Gehäuse
- 4: Kolben
- 5: Kolben
- 6: Druckraum
- 7: Druckraum
- 8: Kolbenrand
- 9: Kolbenrand
- 10: Ringnut
- 11: Ringnut
- 12: Dichtmanschette
- 13: Dichtmanschette
- 14: Nachlaufverbindung
- 15: Nachlaufverbindung
- 16: Nachlaufraum
- 17: Nachlaufraum
- 18: Wandung
- 19: Rückstellfeder
- 20: Rückstellfeder
- 21: Nachlaufkanal
- 22: Nachlaufkanal
- 23: Druckmittelstrom
- B: Betätigungsrichtung
- E1: Hauptebene
- E2: Ebene
- E3: Ebene
- E4: Ebene
- S1: Abstand vom Kolbenrand zur Ebene E1
- S2: Abstand vom Kolbenrand zur Ebene E2
- S3: Abstand vom Kolbenrand zur Ebene E3
- S4: Abstand vom Kolbenrand zur Ebene E4

## Patentansprüche

1. Hauptbremszylinder (1), insbesondere ein Tandem-Hauptbremszylinder für eine hydraulische Kraftfahrzeugbremsanlage, der vorzugsweise von einem pneumatischen Bremskraftverstärker (2) beaufschlagt wird, mit wenigstens einem, in einem Gehäuse (3) verschiebbaren Kolben (4,5), der in dem Gehäuse (3) einen Druckraum (6,7) begrenzt, einen zum Druckraum (6,7) gerichteten Kolbenrand (8,9) aufweist und mittels einer, in einer Ringnut (10,11) des Gehäuses (3) angeordneten Dichtmanschette (12,13) gegenüber dem Druckraum (6,7) abgedichtet ist, in dem Kolben (4,5) jeweils mehrere Nachlaufverbindungen (14,15) vorgesehen sind, die eine hydraulische Verbindung zwischen dem Druckraum (6,7) und einem drucklosen Nachlaufraum (16,17) zu Beginn eines Bremsvorgangs ermöglichen, wobei zumindest einige der Nachlaufverbindungen (14,15) als Querbohrungen durch eine Wandung (18) wenigstens eines Kolbens (5) ausgebildet sind und relativ zum Kolbenrand (9) in einem gleichen Abstand in einer Hauptebene (E1)angeordnet sind, deren Überfahren durch die Dichtmanschette (13) einen Schließweg des Kolbens (5) definiert **dadurch gekennzeichnet, dass** die Nachlaufverbindungen (15) auf mindestens 3 Ebenen (E1,E2,E3) verteilt angeordnet sind, wobei die Ebenen (E1,E2,E3) zueinander beabstandet parallel zum Kolbenrand (9) angeordnet sind.

2. Hauptbremszylinder nach Anspruch 1, **dadurch gekennzeichnet, dass** die Nachlaufverbindungen (15) auf mindestens 4 Ebenen (E1,E2,E3,E4) verteilt angeordnet sind, wobei die Ebenen (E1,E2,E3,E4) zueinander beabstandet parallel zum Kolbenrand (9) angeordnet sind.

3. Hauptbremszylinder nach Anspruch 1 oder 2, **dadurch gekennzeichnet, dass** alle Ebenen außer der Hauptebene (E1) gegenüber der Hauptebene (E1) in Richtung Kolbenrand (9) versetzt angeordnet sind, so dass diese beim Betätigen des Kolbens (5) vor der Hauptebene (E1) durch die Dichtmanschette (13) überfahren werden.

4. Hauptbremszylinder nach Anspruch 1 oder 2, **dadurch gekennzeichnet, dass** die Hauptebene (E1) mindestens 3 Nachlaufverbindungen (15) aufweist.

5. Hauptbremszylinder nach Anspruch 1 oder 2, **dadurch gekennzeichnet, dass** die zweite Ebene (E2) genauso viel oder weniger Nachlaufverbindungen (15) aufweist wie die Hauptebene E1.

6. Hauptbremszylinder nach Anspruch 1 oder 2, **dadurch gekennzeichnet, dass** die jede Ebene (E1,E2,E3,E4) eine gleiche Anzahl Nachlaufverbindungen (15) aufweist.

7. Hauptbremszylinder nach Anspruch 1 oder 2, **dadurch gekennzeichnet, dass** ein Querschnitt jeder einzelnen Nachlaufverbindung (15)der Hauptebene (E1) gleich groß oder größer ausgebildet ist als einzelne Querschnitte der Nachlaufverbindungen (15) aller weiteren Ebenen (E2,E3,E4).

8. Hauptbremszylinder (1) nach Anspruch 1 oder 2, **dadurch gekennzeichnet, dass** eine Summe der Querschnitte aller Nachlaufverbindungen (15) der Hauptebene (E1) gleich groß oder größer ausgebildet ist als eine Summe der Querschnitte aller Nachlaufverbindungen (15) in jeder einzelnen weiteren Ebene (E2,E3,E4).

9. Hauptbremszylinder (1) nach Anspruch 1 oder 2, **dadurch gekennzeichnet, dass** ein Abstand zwischen der ersten Hauptebene (E1) und einer letzten Ebene (E3 oder E4) in einem Bereich zwischen 0,5 mm und 3 mm liegt.

## Claims

1. Master brake cylinder (1), in particular a tandem master brake cylinder for a hydraulic motor vehicle brake system, which is preferably acted upon by a pneumatic brake booster (2), having at least one piston (4, 5), which is movable in a housing (3) and delimits a pressure chamber (6, 7) in the housing (3), has a piston edge (8, 9) directed toward the pressure chamber (6, 7) and is sealed off from the pressure chamber (6, 7) by means of a cup seal (12, 13) arranged in an annular groove (10, 11) of the housing (3), a plurality of replenishing connections (14, 15) is in each case provided in the piston (4, 5), said replenishing connections allowing a hydraulic connection between the pressure chamber (6, 7) and a pressureless replenishing chamber (16, 17) at the start of a braking operation, wherein at least some of the replenishing connections (14, 15) are formed as transverse bores through a wall (18) of at least one piston (5) and are arranged at an equal distance relative to the piston edge (9) in a main plane (E1), the crossing of which by the cup seal (13) defines a closure path of the piston (5), **characterized in that** that the replenishing connections (15) are arranged in a manner distributed between at least three planes (E1, E2, E3), wherein the planes (E1, E2, E3) are arranged spaced apart parallel to the piston edge (9).

2. Master brake cylinder according to Claim 1, **characterized in that** the replenishing connections (15) are arranged in a manner distributed between at least 4 planes (E1, E2, E3, E4), wherein the planes (E1, E2, E3, E4) are arranged spaced apart parallel to the piston edge (9).

3. Master brake cylinder according to Claim 1 or 2, **characterized in that** all the planes apart from the main plane (E1) are arranged offset in the direction of the piston edge (9) relative to the main plane (E1), with the result that they are crossed by the cup seal (13) before the main plane (E1) when the piston (5) is actuated.

4. Master brake cylinder according to Claim 1 or 2, **characterized in that** the main plane (E1) has at least 3 replenishing connections (15).

5. Master brake cylinder according to Claim 1 or 2, **characterized in that** the second plane (E2) has the same number or fewer replenishing connections (15) as/than the main plane (E1).

6. Master brake cylinder according to Claim 1 or 2, **characterized in that** each plane (E1, E2, E3, E4) has an equal number of replenishing connections (15).

7. Master brake cylinder according to Claim 1 or 2, **characterized in that** a cross section of each individual replenishing connection (15) in the main plane (E1) is made the same size as or larger than individual cross sections of the replenishing connections (15) in all the other planes (E2, E3, E4).

8. Master brake cylinder according to Claim 1 or 2, **characterized in that** a sum of the cross sections of all the replenishing connections (15) in the main plane (E1) is made the same size as or larger than a sum of the cross sections of all the replenishing connections (15) in each individual further plane (E2, E3, E4).

9. Master brake cylinder according to Claim 1 or 2, **characterized in that** a spacing between the first main plane (E1) and a last plane (E3 or E4) is in a range between 0.5 mm and 3 mm.

## Revendications

1. Maître-cylindre de frein (1), en particulier maître-cylindre de frein tandem pour un système de freinage hydraulique d'un véhicule automobile, qui est de préférence activé par un servofrein pneumatique (2), avec au moins un piston (4, 5) déplaçable dans un boîtier (3), qui limite une chambre de pression (6, 7) dans le boîtier (3), présente un bord de piston (8, 9) orienté vers la chambre de pression (6, 7) et est rendu étanche par rapport à la chambre de pression (6, 7) au moyen d'une manchette d'étanchéité (12, 13) disposée dans une rainure annulaire (10, 11) du boîtier (3), dans lequel il est prévu dans le piston (4, 5) respectivement plusieurs communications de poursuite (14, 15), qui permettent une communication hydraulique entre la chambre de pression (6, 7) et une chambre de poursuite sans pression (16, 17) au début d'une opération de freinage, dans lequel au moins certaines des communications de poursuite (14, 15) sont formées par des passages transversaux percés à travers une paroi (18) d'au moins un piston (5) et sont disposées par rapport au bord de piston (9) à une égale distance dans un plan principal (E1) dont le franchissement par la manchette d'étanchéité (13) définit un chemin de fermeture du piston (5), **caractérisé en ce que** les communications de poursuite (15) sont disposées de façon répartie sur au moins 3 plans (E1, E2, E3), dans lequel les plans (E1, E2, E3) sont disposés à distance l'un de l'autre parallèlement au bord de piston (9).

2. Maître-cylindre de frein selon la revendication 1, **caractérisé en ce que** les communications de poursuite (15) sont disposées de façon répartie sur au moins 4 plans (E1, E2, E3, E4), dans lequel les plans (E1, E2, E3, E4) sont disposés à distance l'un de l'autre parallèlement au bord de piston (9).

3. Maître-cylindre de frein selon une revendication 1 ou 2, **caractérisé en ce que** tous les plans à l'exception du plan principal (E1) sont disposés de façon décalée par rapport au plan principal (E1) en direction du bord de piston (9), de telle manière que, lors de l'actionnement du piston (5), ceux-ci soient franchis avant le plan principal (E1) par la manchette d'étanchéité (13).

4. Maître-cylindre de frein selon une revendication 1 ou 2, **caractérisé en ce que** le plan principal (E1) présente au moins 3 communications de poursuite (15).

5. Maître-cylindre de frein selon une revendication 1 ou 2, **caractérisé en ce que** le deuxième plan (E2) présente exactement autant de communications de poursuite, ou moins, que le plan principal (E1).

6. Maître-cylindre de frein selon une revendication 1 ou 2, **caractérisé en ce que** chaque plan (E1, E2, E3, E4) présente un même nombre de communications de poursuite (15) .

7. Maître-cylindre de frein selon une revendication 1 ou 2, **caractérisé en ce qu'**une section transversale de chaque communication de poursuite individuelle (15) du plan principal (E1) est de grandeur égale ou supérieure à des sections transversales individuelles des communications de poursuite (15) de tous les autres plans (E2, E3, E4).

8. Maître-cylindre de frein (1) selon une revendication 1 ou 2, **caractérisé en ce qu'**une somme des sections transversales de toutes les communications de poursuite (15) du plan principal (E1) est de grandeur égale ou supérieure à une somme des sections transversales de toutes les communications de poursuite (15) dans chaque autre plan individuel (E2, E3, E4).

9. Maître-cylindre de frein (1) selon une revendication 1 ou 2, **caractérisé en ce qu'**une distance entre le premier plan principal (E1) et un dernier plan (E3 ou E4) se situe dans une plage comprise entre 0,5 mm et 3 mm.
